# EUROPEAN PATENT APPLICATION

(11) **EP 2 503 447 A1**
(43) Date of publication of application: **26.09.2012**
(21) Application number: 12160446.6
(22) Date of filing: 20.03.2012
(51) Int. Cl.: G06F 3/14

(54) **Apparatus, and associated method, for presenting content**

(30) Priority: 22.03.2011 US 201161466377 P
(71) Applicant: Research In Motion Limited, Waterloo, ON N2L 3W8 (CA); Research in Motion Corporation, Wilmington, DE 19801 (US)
(72) Inventor: Lazaridis, Mihal, Waterloo, Ontario N2L 3W8 (CA); Lindsay, Donald James, Waterloo, Ontario N2L 3W8 (CA)
(74) Representative: Greenaway, Martin William

(57) **Abstract**

An apparatus, and an associated method, provides for an asymmetric-mode playout of content at a display or other playout element connected to a wireless device. When the content is played out in an asymmetric mode, the content provided for playout at the external device is nonidentical to the content played out at an integral display element of the wireless device.

## Description

### Cross-Reference of Related Application

The present application claims benefit of U.S. Provisional Application serial no. 61/466,377 filed on March 22, 2011, the contents of which are incorporated herein by reference.

The present disclosure relates generally to a manner by which to present content at an output port, such as an HDMI (High Definition Multimedia Interface), of a wireless, or other electronic, device to make the content available for display, or other playout, at an external playout device. More particularly, the present disclosure relates to an apparatus, and an associated method, by which to present content at the output port of the device that is nonidentical to content presented for display at an integral display of the electronic device.

Selection of content to be provided to the integral display and to the output port for display at an external display is application dependent. Selection is made, for instance, to provide for playout of content media and display of user-interface controls at the integral display while providing for playout of only the content media at the external display. Identical content need not be displayed at both integral and external displays.

### Background

A large number of new communication services and functions have been developed and are popularly utilized, possible as a result of advancements in communication and related technologies. Communication services and functions, previously wholly unavailable or available only at significant expense, are not affordable and readily available to many.

Cellular communication systems, for instance, are made possible as a result of such advancements and are used by many. The network infrastructures of cellular, and cellular-like, communication systems, have been deployed and encompass significant portions of the world.

Successive generations of cellular communication systems have been developed and deployed. Early-generation systems generally provided for voice communication services and only limited data communication services. Successor-generation systems have provided for more data-intensive communication services.

A cellular communication system provides for telephonic communications through use of portable wireless devices, sometimes referred to as mobile stations. A conventional, portable wireless device is often times of a size and weight that permits the wireless device to be hand-carried, or otherwise maintained in the possession of a user, to be available whenever needed pursuant to a communication, or other, service.

Particularly in recent years, wireless devices have been provided with additional functionalities. The functionalities are typically, but not necessarily, communication-service related. Functionalities that are sometimes provided to wireless devices pertain to the display or playout of communication data, such as multimedia data. The multimedia data, refer to herein as content media, is delivered to the wireless device during operation of the communication system, generated at the wireless device, or provided to the device in another manner.

A wireless device often times includes an integral display screen, capable of presenting, in high-resolution, a video display, such as a video segment of the multimedia content media.

Integral display screens forming portions of wireless devices are generally of small dimensions, constrained in size by the size constraints of the wireless devices. Viewing of the video on the small-sized display, however, provides for convenience of display as the video is viewable by a user merely by properly orienting the display to permit viewing thereof. However, even when of high-resolution, the display presentation at an integral display screen is a non-ideal presentation due to the small dimensions of the display screen.

Recent attention has been directed towards providing a wireless device with the capability of displaying the video content of a wireless device at an external display, such as a full-sized television screen display. The display of the content media at a large-sized display generally provides for an improved viewing experience, particularly when viewing is to be performed by a number of viewers.

Various challenges and issues remain with respect to use of the external screen display for viewing of the content. And, potential benefits of such display have not fully been addressed.

It is in light of this background information related to wireless devices that the significant improvements of the present disclosure have evolved.

### Brief Description of the Drawings

Figure 1 illustrates a functional block diagram of a radio communication system having a wireless device that operates in conformity with an implementation of the present disclosure.

Figure 2 illustrates a process diagram representative of the process of operation of an implementation of the present disclosure.

Figure 3 illustrates a method flow diagram representative of the method of operation of an implementation of the present disclosure.

### Detailed Description

The present disclosure, accordingly, advantageously provides an apparatus, and an associated method, by which to present content at an output part, such as an HDMI, of a wireless, or other, electronic device. The content is made available for display, or other playout, at an external playout device.

In one aspect of the present disclosure, a manner is provided by which to present content at the output port of the device that is nonidentical to content presented for display at the internal display of the electronic device.

In another aspect of the present disclosure, selection of content to be provided to an output port for display at an external display is application dependent. For instance, selection is made to provide for playout of content media and display user interface controls at the internal display, while providing for playout of only the content media at the external display. Identical content need not be displayed at both the internal and external displays.

In another aspect of the present disclosure, an asymmetric mode of operation is provided. When operated in the asymmetric mode, content is provided both to an internal display and made available for an external display. The content provided to the internal display and made available for the external display is nonidentical. That is to say, the content made available for playout at the separate displays is dissimilar in some manner. And, when the content is played out, the content is not identical but, rather, differs in some regard.

In another aspect of the present disclosure, operability in the asymmetric mode is application dependent. That is to say, selection to cause operation in the asymmetric mode is dependent upon an application associated with the content. Content generated or utilized by the application is played out in conformity with operational rules of the specific application.

In another aspect of the present disclosure, the asymmetric mode forms an application mode of a specific application. The asymmetric mode, implementable on an application-by-application basis, provides for availability of the mode depending upon the application associated with the content. The mode is thereby application-dependent rather than a global mode of the device at which the application is implemented.

In another aspect of the present disclosure, detection is made of a selection to provide for playout of content. And, responsive to such detection, determination is made of whether the playout is to be in the asymmetric mode in which nonidentical content is provided to an internal display, i.e., built-in display, of the device and at an output port, available for playout at an external display. When the external display is connected to the output port, the content is provided both to the internal display and to the external display and caused to be played out. The content provided to the separate displays is nonidentical.

In another aspect of the present disclosure, the content comprises content media. First content media is provided to the internal display for playout thereat, and second content media is provided to, or no output is provided to, an output port that is connected content media is dissimilar in some manner with the second content media, and, thereby, the first content media is nonidentical to the second content media.

In another aspect of the present disclosure, the content comprises content indicia. First output indicia is provided to the internal display for playout thereat. And, second output indicia is provided to an output port to be available for playout at an external display. The first output indicia is dissimilar in some manner to the second output indicia. Or, the second output indicia is blank, i.e., of a null value or otherwise not provided to the output port. Thereby, the content provided to the internal display differs with the content available for display at the external display.

In another aspect of the present disclosure, the output indicia provided to the internal display but not to the external display comprises alphanumeric or iconic information. The alphanumeric or iconic information comprises, for instance, user-interface information or descriptive information.

In another aspect of the present disclosure, the output port to which the content is provided is permitting of connection to an HDMI input of the external display. When operated in the asymmetrical mode, the content provided for playout at the external display is dissimilar in some manner with the content provided for playout at the internal display.

Thereby, a manner is provided by which to permit different content to be played out at an external transducer than the content played out at an internal transducer. The asymmetric playout of the content is application-dependent, and the asymmetry or symmetry of the playout is defined by the application.

In these and other aspects, therefore, an apparatus, and an associated method, is provided for an electronic device having a device content transducer and a content output port. A detector is configured to detect selection to provide playout of selected content. A determiner is configured to determine whether the playout of the selected content is to be in an asymmetric mode. And, a content provider provides first output content at the content output port and second output content at the device content transducer. The first output content and the second output content is nonidentical when determination is made that the playout is to be in the asymmetric mode.

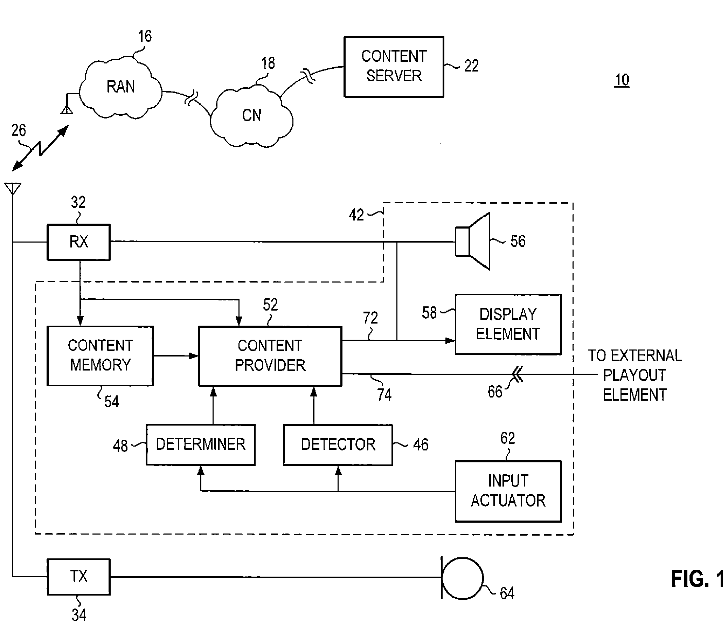

Turning first, therefore, to Figure 1, a communication system, shown generally at 10, provides for communications with communication stations, here represented by a wireless device 12. In the exemplary implementation, the communication system 10 comprises a cellular communication system operable in general conformity with operating protocols promulgated in a cellular communication standard. The communication system 10 is more generally representative of any of various communication systems, both wireless and wired. And, the device 12 is more generally representative of any of various devices, both communication devices, and stand alone devices, that are capable of a content playout functionality. While the following description shall describe exemplary operation with respect to the exemplary implementation in which the communication system 10 forms a cellular communication system and the device 12 forms a wireless device operable therein, it should be understood, in other implementations, operation can be analogously described.

The communication system 10 includes a network part, here formed of a radio access network (RAN) 16 and a core network (CN), such as the internet or other packet data network, 18. Communication devices are connected to the network part, such as other wireless devices (not shown) placed in communication connectivity with the radio access network 16 and communication entities connected directly or indirectly with the core network 18. The content server 22 is representative of a communication entity placed in communication connectivity with the core network 10.

Communications are effectuated with the wireless device by way of radio channels, represented by the arrow 26, defined by a radio air interface formed between the network part and the wireless device. Normal telephonic communications to perform both voice and data communication services are carried out by way of radio channels 26 allocated to, or used pursuant to, the communication service. Information originated at the wireless device 12 is sent by way of radio channels to the network part. And, information originated, or routed by way of, the network part, is sent to the device 12 by way of radio channels 26.

The wireless device 12 includes transceiver circuitry, here represented by a receive part (Rx) 32 and a transmit part (Tx) 34. Information communicated to the wireless device is received by the receive part 32, and information originated at the wireless device for communication elsewhere is transmitted by the transmit part 34. In exemplary operation, content sourced at the content server 22 is provided to the wireless device, such as in response to a request for selected content stored thereat. A request for the content is made at the wireless device 12 and sent by the transmit part 34 upon a radio channel 26 and routed to the radio access network 16 and core network 18 for delivery to the content server. Responsive to the request, the content is accessed at the content server, and the content is sent by way of the core network 18, radio access network 16, one or more radio channels 26, and delivered to the wireless device. When the content comprises a media service, the content media is available for playout, either immediately, or at a later time.

As mentioned previously, the content is conventionally played out at a playout device that is integral to the wireless device. And, if connection is made to playout the content at an external playout device, the same content that is played out at the integral playout device is played out at the external device. That is to say, the integral-device playout is mirrored at the external device. This existing scenario does not take advantage of the multiple playout elements nor does the existing scenario permit the external display to be anything more than a mirror of the integral display.

Pursuant to an implementation of the present disclosure, the wireless device provides an apparatus 42 of an implementation of the present disclosure. The apparatus 42 is formed of functional elements, implementable in any desired manner, including, for instance, hardware elements, firmware elements, algorithms implementable by processing circuitry, and combinations thereof. Additionally, while all of the elements of the apparatus 42 of the exemplary implementation are embodied at the wireless device 12, in other implementations, the functionality of the apparatus is distributed across more than one physical location.

The apparatus 42 here includes a detector 46, a determiner 48, a content provider 52, a content memory 54, and user-interface elements including an acoustic transducer 56, a display element 58, and an input actuator 62. The wireless device further includes an input transducer 64. And, the wireless device further includes an output port 66 that provides for connection to an HDMI, or other, port of an external display device (not shown in Figure 1). In operation, the apparatus 42 provides for playout content at the internal playout element, such as the speaker 56 and the display element 58 that is nonidentical with the content provided at the output port 66 for playout at the external device. Selection is made, such as by a user of the device 12, to playout selected content. Selection by a user ofthe device is made, e.g., through commands entered by way of the input actuator 62. The input selection identifies, for instance, the function that is to be performed by the device 12, such as selection to playout selected multimedia content.

An indication of the selection is provided to the detector 46, and the detector detects the selection to playout the selected content. An indication of the selection is further provided to the determiner 48.

The detector, responsive to detection of the selection by the detector, provides an indication of the detection to the content provider 52. The content provider 52, in one implementation, is application-based, and invokes an application responsive to the detected indication of the selection. In one implementation, playout of content is application-dependent. That is to say, the manner by which content is played out is dependent upon the application that is invoked to play out the selected content. In other implementations, the manner of playout is determined in another manner, such as selection by the user or some other criteria.

The content provider operates to provide content for playout. In one implementation, the content is retrieved from the content server 22 and downloaded to the device 12. In another implementation, the content is stored at the content memory 54, and the content provider accesses the content memory to retrieve the stored content.

If the content is to be played out asymmetrically, i.e., in an asymmetric mode in which content is played out in an asymmetrical manner, i.e., in a manner in which the content played out at integral playout elements, here the acoustic transducer 56 and the display element 58 is not identical to the content that is provided at the output port 66 for playout at an external device. If playout in an asymmetric mode is not selected, playout is instead performed in a mirror mode, that is, a mode in which identical content is made available for playout at the integral playout elements as well as at the output port 66 for playout at an external element.

The content provider forms a first content stream on the lines 72 that are to be played out at the integral playout elements 56 and 58 and forms a second content stream on the lines 74 that are to be played out at the external device when connected to the output port 66.

In one exemplary implementation, playout of content comprises playout of video media content. The content provider provides the video media content on the lines 74 for playout at an external element. The content provider provides both the video media and navigational controls, associated with control of the playout of the video media. The navigational controls include, e.g., play and pause controls, skip control, etc. By providing for the display of the navigational controls only to the internal playout element, the display element 58, other viewers of the content media, when viewing the playout at the external display do not view content in a manner in which the content media that is impeded by control indicia. The navigational controls comprise content indicia that is associated with the content media.

In another exemplary implementation, the content comprises a slide show formed successive video images. The images are provided by the content provider on the line 74 for display at an external playout device. The content provider provides the video images and also alpha numeric information on the lines 72, such as descriptive material associated with the video images. Viewers of the images displayed at the external playout device view only the images and not the alpha numeric information, while both the video and the alpha numeric information is displayed at the integral element 58.

When the playout ofthe content is completed, the playout is terminated, and selection is made, if desired, to play additional content.

Thereby, through operation of the apparatus 42, nonidentical content can be played out at the internal playout elements and at an external display. Complete identicity of the content provided to the separate playout devices is not required when the apparatus causes operation in an asymmetric mode of operation. When invoked, such as by selection of operation of a particular application or direct selection, the playout of the content is carried out in a manner in which dissimilar content, i.e., not wholly identical content, is provided to an internal playout element and to an external playout element.

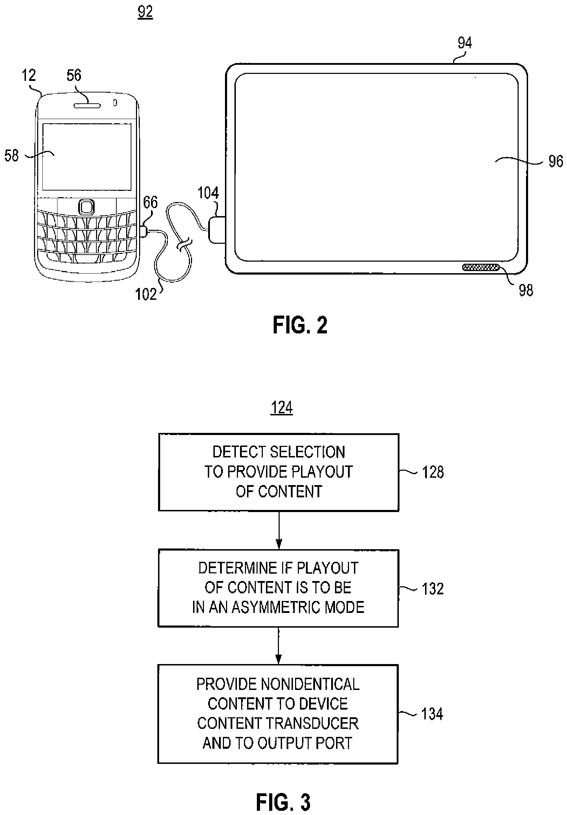

Figure 2 illustrates arrangement 92 that includes an electronic device, here the wireless device 12, connected to an external playout element 94, such as a digital television receiver having a digital display 96 and an acoustic transducer 98. The playout element 94 is connected to the device 12 by way of a cable 102 that interconnects the port 66 of the device 12 and a corresponding port 104 of the element 94. In the exemplary implementation, the ports 66 and 104 comprise HDMI ports. In other implementations, other connection-types are utilized, such as a VGA port or a wireless connection, such as a Bluetooth connection or other radio connection.

In operation, when content is selected to be played out, and the content is to be played out pursuant to an asymmetric mode, the content provided for playout at the internal playout elements 56 and 58 is nonidentical with the content played out at the playout element 94. Alternately, if mirror mode operation is utilized, then the content played out at the internal playout element correspond.

Figure 3 illustrates a method flow diagram 124 representative ofthe method of operation of an implementation of the present disclosure. The method facilitates playout by an electronic device that has a device content transducer and a content output port.

First, and as indicated by the block 128, selection to provide playout of selected content is detected. Then, and as indicated by the block 132, a determination is made as to whether the playout of the selected content is to be in an asymmetric mode.

Then, and as indicated by the block 134, first output content is provided at the content output port, and second output content is provided at the device content transducer. The first output content and the second output content are nonidentical when determination is made that the playout is to be in the asymmetric mode. Thereby, a manner is provided by which to playout nonidentical content at an external device, such as a digital television connected to a wireless, or other electronic, device by way of an HDMI connection that differs with the content played out at an internal display of the wireless, or other electronic, device.

Presently preferred implementations of the disclosure and many of improvements and advantages thereof have been described with a degree of particularity. The description is of preferred examples of implementing the disclosure, and the description of examples is not necessarily intended to limit the scope of the disclosure. The scope of the disclosure is defined by the following claims.

## Claims

1. An apparatus for an electronic device having a device content transducer and a content output port, said apparatus comprising:
a detector configured to detect selection to provide playout of selected content;
a determiner configured to determine whether the playout of the selected content is to be in an asymmetric mode;
a content provider configured to provide first output content at the content output port and second output content at the device content transducer, the first output content and the second output content nonidentical when said determiner determines that the playout is to be in the asymmetric mode.

2. The apparatus of claim 1 wherein the first output content comprises first content media and wherein the second output content comprises second content media, the first content media nonidentical with the second content media when said determiner determines that the playout is to be in the asymmetrical mode.

3. The apparatus of claim 1 wherein the first output content comprises first output indicia and wherein the second output content comprises second output indicia, the first output indicia nonidentical with the second output indicia when said determiner determines that the playout is to be in the asymmetric mode.

4. The apparatus of claim 1 wherein said detector is configured to detect selection to provide playout of selected content of a selected application-invoked at the electronic device.

5. The apparatus of claim 4 wherein availability of the asymmetric mode is application-dependent.

6. The apparatus of claim 1 wherein said content provider is configured to provide video content, wherein the first output content comprises first output video content, and wherein the second output content comprises second output video content and the second output video content nonidentical when the playout is to be in the asymmetric mode.

7. The apparatus of claim 1 wherein the first output content comprises output indicia that is nonidentical to output indicia, if any, of the second output content.

8. The apparatus of claim 1 wherein the second output content comprises output indicia that is nonidentical to output indicia, if any, of the first output content.

9. The apparatus of claim 1 wherein said determiner is further configured to determine whether the playout of the selected content is to be in a mirror mode.

10. The apparatus of claim 9 wherein said content provider is further configured to provide the first output content at the content output port and the second output content at the device content transducer, the first output content and the second output content identical when said determiner determines that the playout is to be in the mirror mode.

11. The apparatus of claim 1 wherein the content output port comprises an external-display-connectable port and wherein, when determiner determines the playout of the selected content is to be the asymmetric mode, said content provider is configured to provide external-display displayable first output content.

12. A method for facilitating playout by an electronic device having a device content transducer and a content output port, said method comprising:
detecting selection to provide playout of selected content;
determining whether the playout of the selected content is to be in an asymmetric mode; and
providing first output content at the content output port and second output content at the device content transducer, the first output content and the second output content nonidentical when determination is made during said determining that the playout is to be in the asymmetric mode.

13. The method of claim 12 wherein said determining further comprises determining whether the playout of the selected content is to be in a mirror mode.

14. The method of claim 12 wherein the first output content and the second output content provided during said providing is identical when determination is made during said determining that the playout is to be in the mirror mode.

15. The method of claim 12 wherein the first output content comprises first output indicia and wherein the second output content comprises second output indicia, the first output indicia nonidentical with the second output indicia when determination is made during said determining that the playout is to be in the asymmetric mode.
